# FASCICULE DE BREVET EUROPEEN

(11) **EP 1 761 378 B1**
(45) Date de publication et mention de la délivrance du brevet: **29.08.2012**
(21) Numéro de dépôt: 05778785.5
(22) Date de dépôt: 22.06.2005
(51) Int. Cl.: B29C 65/06, F16L 37/00, B29D 23/00

(54) **Element soudable par friction sur une extremite de tube et procede de soudage correspondant**
An ein Rohr mittels Reibschweissen anschweissbares Element und entsprechendes Schweissverfahren
Element frictionally weldable to a tube end and corresponding welding method

(30) Priorité: 28.06.2004 FR 0407052
(43) Date de publication de la demande: 14.03.2007
(73) Titulaire: PARKER HANNIFIN MANUFACTURING France SAS, 74100 Ville-la-Grand (FR)
(72) Inventeur: BLIVET, Philippe, F-35200 RENNES (FR); PODER, Philippe, F-35580 GUICHEN (FR)
(74) Mandataire: Lavialle, Bruno François Stéphane
(86) Numéro de dépôt international: PCT/FR2005/001567
(87) Numéro de publication internationale: WO 2006/010815

(56) Documents cités:
- EP-A- 0 139 712
- EP-A- 0 226 771
- WO-A-94/24477
- DE-A1- 3 903 551
- FR-A- 1 098 217
- US-A- 4 059 294
- US-A- 4 198 077
- US-A- 4 547 239
- US-B1- 6 199 916
- PATENT ABSTRACTS OF JAPAN vol. 2002, no. 12, 12 décembre 2002 (2002-12-12) & JP 2002 228080 A (SEKISUI CHEM CO LTD), 14 août 2002 (2002-08-14)

## Description

La présente invention concerne un élément tubulaire d'un circuit de transport de fluide, destiné à être fixé à une extrémité de tube par soudage par friction. L'invention a également comme objet un procédé de soudage par friction.

Un tel élément est par exemple un élément émetteur de fluide ou récepteur de fluide, et plus particulièrement un élément de raccordement de l'extrémité de tube, par exemple à une autre extrémité de tube, une pompe, un réservoir...

### ARRIERE PLAN DE L'INVENTION

Il est connu des documents EP0139712 et DE 3903551 un élément de raccordement qui comporte un corps dans lequel est ménagé un logement pour accueillir une extrémité de tube. Le logement comporte un tronçon d'entrée de l'extrémité de tube et un tronçon de soudage ayant une entrée délimitée par une surface d'amorçage du soudage.

L'extrémité de tube est fixée à l'élément de raccordement par un procédé de soudage par friction qui comprend les étapes de :
- introduire l'extrémité de tube dans le logement,
- mettre en frottement l'extrémité de tube contre la surface d'amorçage pour ramollir la matière du tube et la matière de l'élément,
- introduire l'extrémité de tube dans le tronçon de soudage du logement pour y souder l'extrémité de tube.

Ce mode de fixation de l'extrémité de tube à l'élément de raccordement est particulièrement rapide et efficace avec les tubes et les éléments de raccordement réalisés classiquement en matière thermoplastique

Toutefois, les matières thermoplastiques constituant les tubes et les corps des éléments de raccordement incorporent de plus en plus fréquemment des charges visant à améliorer leur performance et notamment leur résistance aux sollicitations mécaniques, aux produits chimiques, à la température, au rayonnement... Or, il existe un risque que ces charges constituent au niveau de soudure des zones hétérogènes qui fragilisent la soudure.

En outre, les contraintes de fonctionnement auxquelles sont soumis les tubes de transport de fluide rendent nécessaire de recourir à des structures multicouches dont chaque couche constitue une réponse économique à une ou plusieurs des contraintes auxquelles le tube est soumis. A titre d'exemple, un tube multicouche peut comprendre une couche interne chimiquement compatible avec le fluide véhiculé, une couche intermédiaire formant barrière au gaz et/ou assurant une fonction de renfort mécanique, et une couche externe résistant aux agressions extérieures telles que la température, le rayonnement ultraviolet, les agressions chimiques... Seule la couche externe ou la couche interne est réalisée en un matériau susceptible d'être soudé au matériau constituant l'élément de raccordement. Il en résulte que l'épaisseur de matériau disponible pour la soudure est relativement faible par rapport à celle d'un tube monocouche dont une plus grande épaisseur pourrait être utilisée pour le soudage. Les contraintes résultant d'un effort de traction exercé sur le tube seront donc concentrées sur une zone relativement réduite, ce qui pourrait conduire à une détérioration de la soudure.

Il est connu du document US-A-4 198 077 un élément destiné à être fixé à une extrémité de tube par déformation de l'extrémité du tube dans une gorge à l'aide d'une pinnule de chauffage. Cet assemblage est complété par un joint torique afin d'assurer l'étanchéité entre le tube et l'élément. De plus cet assemblage nécessite une pinnule de chauffage. La fixation de l'élément sur le tube est donc complexe et nécessite des moyens de soudage difficiles à mettre en oeuvre.

Il est connu du document US-A-4 547 239 un élément destiné à être fixé à une extrémité de tube par soudage par friction. L'élément comporte un logement pour y accueillir l'extrémité de tube. Le logement comprend un tronçon d'entrée relié à un tronçon de soudage par une surface d'amorçage. Une gorge hélicoïdale est ménagée dans le tronçon de soudage. Lors du soudage la matière de l'extrémité de tube s'expand dans la gorge. La retenue du tube risque toutefois d'être insuffisante en cas de fortes sollicitations du tube.

### OBJET DE L'INVENTION

Il serait donc intéressant de disposer d'un moyen économique et fiable pour réaliser par friction des soudures résistantes sur des éléments tubulaires destinés au transport de fluide.

### BREVE DESCRIPTION DE L'INVENTION

A cet effet, on prévoit, selon l'invention, un élément tubulaire suivant la revendication 1.

Après durcissement, la partie refoulée forme un bourrelet qui vient en appui du flanc de butée. Ainsi, les contraintes résultant de sollicitations mécaniques exercées sur le tube sont réparties à la fois sur la zone soudée et sur la zone de contact entre la partie refoulée du tube et le flanc de butée.

De préférence, le logement a une forme annulaire dont une surface interne est formée par une surface externe d'un nez solidaire de l'élément pour être introduit dans l'extrémité de tube.

Ainsi, le nez empêche que le tube ne fasse un bourrelet interne sous l'effort d'introduction dans le tronçon de soudage. Un tel bourrelet constituerait en effet une restriction de la section de passage du fluide dans le tube. Le nez exerce en outre une fonction de guidage du tube dans le logement.

L'invention a également pour objet un procédé de soudage par friction suivant la revendication 5.

D'autres caractéristiques et avantages de l'invention ressortiront à la lecture de la description qui suit de modes de réalisations particuliers non limitatifs de l'invention.

### BREVE DESCRIPTION DES DESSINS

Il sera fait référence aux dessins annexés, parmi lesquels :

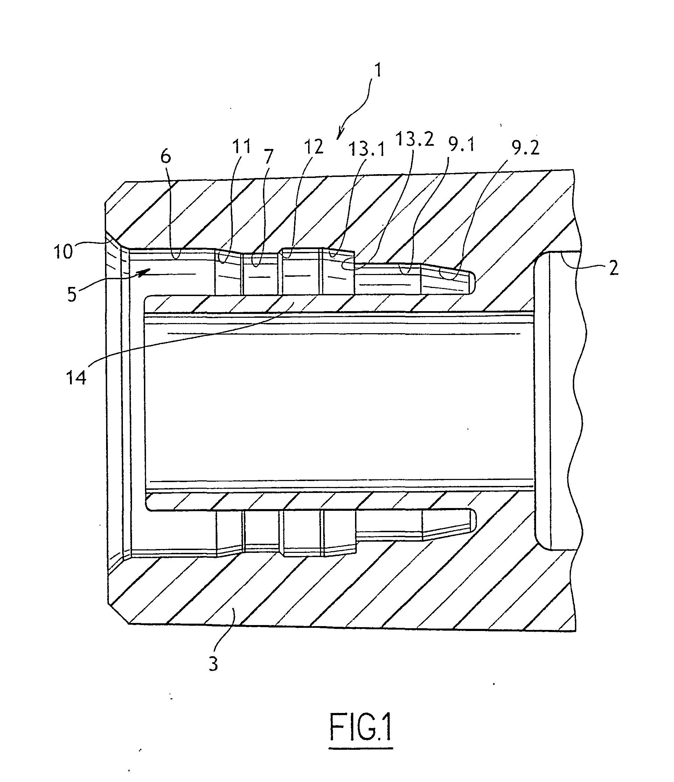

- la figure 1 est une vue schématique partielle, en coupe longitudinale, d'un élément de raccordement conforme à un premier mode de réalisation de l'invention,

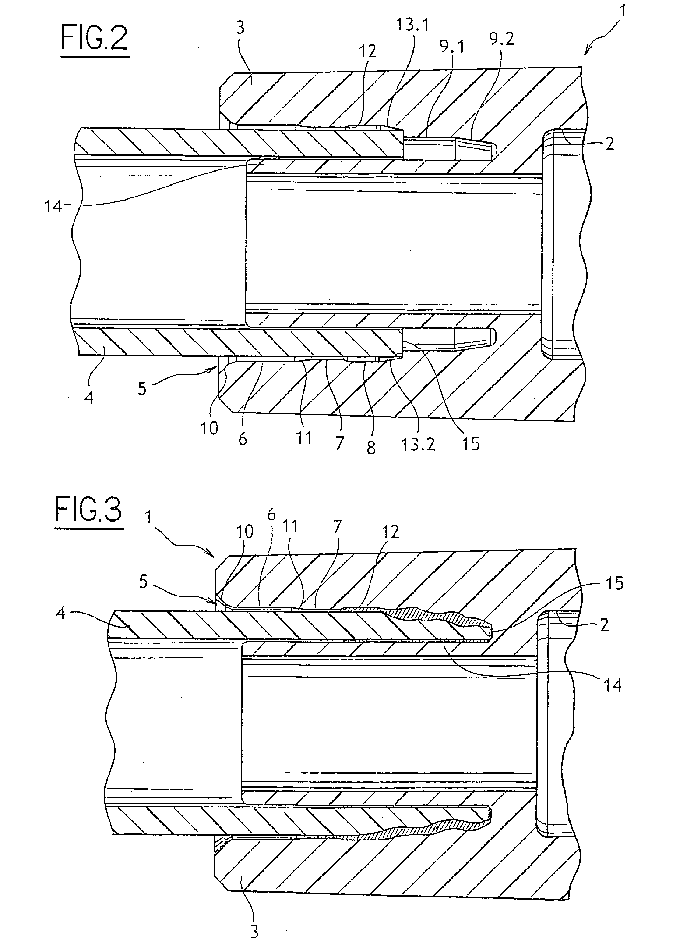

- la figure 2 est une vue analogue à celle de la figure 1 a début de l'opération de soudage d'une extrémité de tube dans l'élément de raccordement,
- la figure 3 est une vue analogue à celle de la figure 1 à la fin de l'opération de soudage,

- la figure 4 est une vue analogue à celle de la figure 1 d'une variante du premier mode de réalisation,
- la figure 5 est une vue analogue à celle de la figure 1 d'un élément de raccordement conforme à un deuxième mode de réalisation de l'invention,
- la figure 6 est une vue analogue à celle de la figure 1 d'un élément de raccordement conforme à un troisième mode de réalisation.

### DESCRIPTION DETAILLEE DE L'INVENTION

L'invention est ici décrite en relation avec un élément de raccordement, tel qu'un raccord, comportant un corps, généralement désigné en 1, dans lequel est ménagé un conduit 2 débouchant, d'une part, dans une section 3 du corps agencée pour permettre le raccordement d'une extrémité de tube 4 au conduit 2 et, d'autre part, dans une section du corps, non visible sur les figures, agencée pour permettre le raccordement du conduit 2 à une autre extrémité de tube ou bien à un organe émetteur ou récepteur de fluide tel qu'un réservoir, une pompe... Cette dernière section peut par exemple comprendre un embout à dent de sapin, des moyens de connexion instantanée comme une rondelle à dents ou un élément mobile de verrouillage destiné à coopérer avec un embout solidaire de l'organe.

La section 3 du corps 1 comprend un logement, généralement désigné en 5, destiné à accueillir l'extrémité de tube 4 et dans lequel l'extrémité de tube 4 est destinée à être soudée par friction. Le conduit 2 débouche coaxialement dans le logement 5.

Le logement 5 comprend, de façon axialement successive un tronçon d'entrée 6, un tronçon de guidage 7, une gorge 8 et un tronçon de soudage 9.

Le tronçon d'entrée 6, de forme cylindrique, débouche à l'extérieur du corps 1 par un chanfrein 10 et se raccorde par l'intermédiaire d'une surface tronconique 11 au tronçon de guidage 7.

Le tronçon d'entrée 6 a un diamètre supérieur au diamètre externe de l'extrémité de tube 4.

Le tronçon de guidage 7, de forme cylindrique, a un diamètre inférieur au diamètre du tronçon d'entrée 6 et légèrement supérieur au diamètre externe de l'extrémité de tube 4 pour recevoir celle-ci à coulissement avec un jeu transversal minime.

La gorge 8 a un diamètre supérieur au diamètre du tronçon de guidage 7 et comporte un flanc 12 de raccordement au tronçon de guidage 7 et un flanc 13 de raccordement au tronçon de soudage 9. Le flanc 12 a une forme tronconique. Le flanc 13 comprend du côté du fond de la gorge une surface tronconique 13.1 et du côté du tronçon de soudage 9 une surface annulaire 13.2 radiale.

Le tronçon de soudage 9 a un diamètre inférieur au diamètre externe de l'extrémité de tube 4. Le tronçon de soudage 9 comprend ici une partie cylindrique 9.1 du côté de la gorge 8 et à l'opposé de la gorge 8 une partie tronconique 9.2 borgne.

Un nez 14 tubulaire s'étend coaxialement dans le logement 5. Le nez 14 est également agencé pour constituer un appendice de guidage de l'extrémité de tube de telle manière que le logement ait une forme annulaire borgne du côté de la partie 9.2 du tronçon de soudage 9. L'élément de raccordement et l'extrémité de tube sont réalisés dans des matériaux thermoplastiques soudables l'un sur l'autre.

La fixation de l'extrémité de tube 4 dans l'élément de raccordement va maintenant être décrite.

La fixation est réalisée par soudage par friction. Cette technique de soudage est connue en elle-même. Le procédé de l'invention comprend l'étape d'introduire l'extrémité de tube dans le logement 5 jusqu'à mettre en contact la face terminale 15 de l'extrémité de tube 4 contre la surface annulaire 13.2.

L'extrémité de tube est ensuite mise en mouvement par rapport à l'élément de raccordement de manière que la face terminale de l'extrémité de tube 4 frotte contre la surface annulaire 13.2. Cette opération de mise en frottement est ici réalisée en imprimant un mouvement de rotation à l'extrémité de tube 4 par rapport à l'élément de raccordement.

Le frottement de la face terminale 15 de l'extrémité de tube 4 contre la surface annulaire 13.2 va provoquer un échauffement localisé du tube et de la portion adjacente de l'élément de raccordement qui va permettre le ramollissement de la matière de l'extrémité de tube et de l'élément de raccordement dans cette zone pour amorcer le soudage de l'extrémité de tube 4 dans l'élément de raccordement.

L'effort d'insertion se poursuivant, le tube va pénétrer dans le tronçon de soudage 9 pour y être finalement soudé.

Lors de cette pénétration du tube dans le tronçon de soudage 9, une partie du matériau constituant l'extrémité de tube 4 est refoulée dans la gorge 8.

A la fin du soudage, l'ensemble extrémité de tube 4 et élément de raccordement est refroidi. La partie refoulée du tube forme alors un bourrelet qui est au contact du flanc 12 de la gorge 8 qui constitue une butée à l'extraction de l'extrémité de tube 4 hors du logement 5 de l'élément de raccordement.

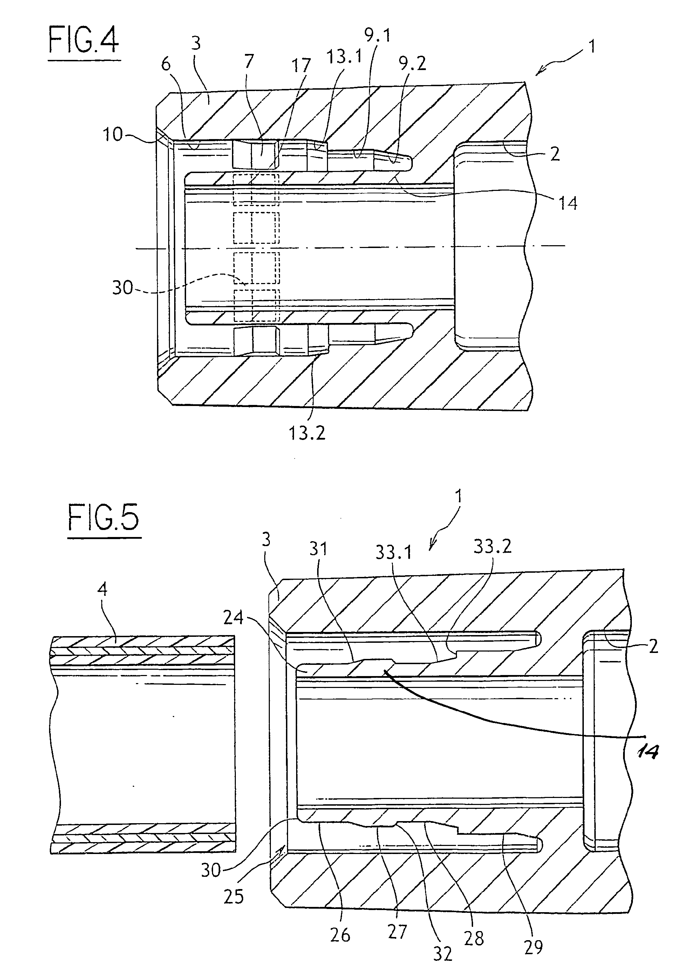

Selon la variante représentée à la figure 4, le tronçon de guidage 7 peut être pourvu de rainures axiales 17.

Lors du soudage, de la matière refoulée pénètre dans ces rainures qui forment un obstacle à la rotation du tube. Une seule rainure peut suffire à cette fonction, de même, par exemple, qu'une autre forme qui serait en saillie dans la matière refoulée.

En référence à la figure 5, et selon le deuxième mode de réalisation, le corps 1 comprend un logement 25 dans lequel s'étend coaxialement un nez 14. Le logement 25 a ainsi une forme annulaire dont la surface interne est formée par la surface externe du nez 14. La surface externe du logement 25 est ici cylindrique. La surface externe du nez 14 comprend un tronçon d'entrée 26, un tronçon de guidage 27, une gorge 28 et un tronçon de soudage 29 qui sont agencés de façon symétrique par rapport aux différents tronçons du logement 5 décrit en référence au premier mode de réalisation pour exercer des fonctions identiques.

Le tronçon de guidage 27 a ainsi un diamètre légèrement inférieur au diamètre interne de l'extrémité de tube, le tronçon d'entrée 26 a un diamètre inférieur à celui du tronçon de guidage 27, et la gorge 28 a un fond de gorge de diamètre inférieur au diamètre du tronçon de guidage 27. Le tronçon de soudage 29 a un diamètre supérieur au diamètre interne de l'extrémité de tube.

Le tronçon d'entrée 26 comprend une extrémité biseautée 30 et à l'opposé une surface tronconique 31 de raccordement au tronçon de guidage 27.

La gorge 28 a, du côté du tronçon de guidage 27, un flanc 32 de forme tronconique destiné à former une butée pour la matière refoulée et, du côté du tronçon de soudage 9, un flanc 33. Le flanc 33 comprend une surface tronconique 33.1 jouxtant une surface annulaire radiale 33.2.

Le flanc 32 de la gorge 28 constitue une butée à l'extraction de l'extrémité de tube hors du logement 25, comme dans le premier mode de réalisation.

Le tube est ici un tube multicouche dont la couche interne est en un matériau présentant des propriétés de soudabilité avec le matériau de l'élément de raccordement.

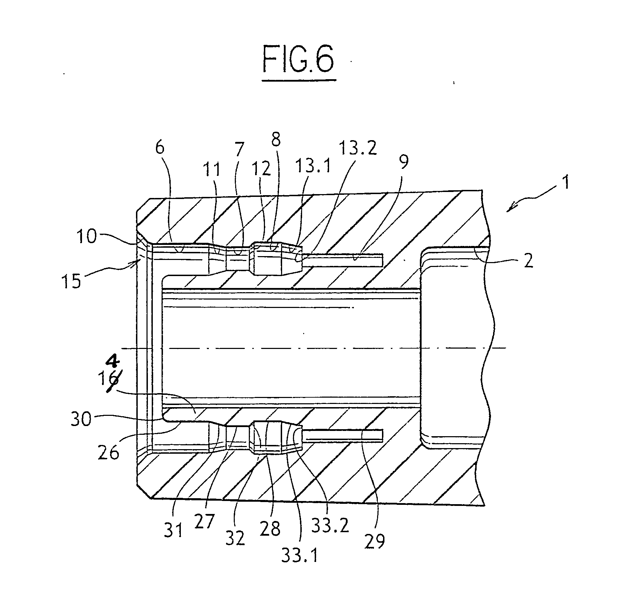

En référence à la figure 6 et conformément au troisième mode de réalisation, le logement 45 destiné à accueillir l'extrémité de tube a une forme annulaire délimitée par une surface externe agencée comme celle du premier mode de réalisation et une surface interne agencée comme celle du deuxième mode de réalisation.

Bien entendu, l'invention n'est pas limitée aux modes de réalisation décrits et on peut y apporter des variantes de réalisation sans sortir du cadre de l'invention tel que défini par les revendications.

En particulier, la mise en frottement peut également être réalisée en faisant vibrer l'extrémité de tube 4 par rapport à l'élément de raccordement.

Le tronçon de soudage 9 peut en outre être totalement cylindrique.

Dans le premier mode de réalisation, il est possible d'utiliser des tubes multicouches dont la couche externe est en un matériau soudable avec le matériau de l'élément de raccordement.

Par ailleurs, le nez 14 est facultatif.

Le flanc 12, 32 de la gorge peut être formé par une surface non tronconique et par exemple une surface radiale.

Pour former des obstacles à la rotation du tube, au moins un relief peut être prévu dans la gorge 8, 28. Ce relief peut être une partie saillante qui peut avoir la forme d'une languette ou d'un ergot, ou une partie creuse telle qu'une rainure. La gorge peut en outre avoir une circonférence interrompue par intervalle.

## Revendications

1. Elément tubulaire en matière thermoplastique ramollissable par friction destiné à être fixé à une extrémité de tube par soudage par friction pour transporter un fluide, l'élément comportant un corps (1) dans lequel est ménagé un logement (5) pour accueillir l'extrémité de tube, le logement comportant un tronçon d'entrée (6) de l'extrémité de tube et un tronçon de soudage (9) ayant une entrée définie par une surface d'amorçage (13.2) du soudage, le tronçon de soudage (9) comportant au moins une partie de forme cylindrique de diamètre compris entre des diamètres externe et interne de l'extrémité de tube, **caractérisé en ce que** le logement comprend entre le tronçon d'entrée et le tronçon de soudage, au moins une gorge de réception (8) d'une partie refoulée de l'extrémité de tube lors du soudage, la gorge de réception ayant un flanc dont au moins une portion forme la surface d'amorçage et à l'opposé un flanc de butée pour la partie refoulée.

2. Elément selon la revendication 1, **caractérisé en ce que** le logement (5) a une forme annulaire dont une surface interne est formée par une surface externe d'un nez (14) solidaire de l'élément pour être introduit dans l'extrémité de tube.

3. Elément selon la revendication 2, **caractérisé en ce que** la gorge de réception (28) est réalisée extérieurement sur le nez (14).

4. Elément selon l'une quelconque des revendications 1 à 3 **caractérisé en ce que** le logement (5) comprend, au voisinage du tronçon d'entrée (6), un tronçon (7) de guidage de l'extrémité de tube.

5. Procédé de soudage par friction d'un élément à une extrémité de tube, les deux étant en matière thermoplastique ramollissable par friction comprenant l'étape d'introduire l'extrémité de tube dans un logement ménagé dans l'élément de telle manière que le logement comporte un tronçon d'entrée (6) de l'extrémité de tube et un tronçon de soudage (9) ayant une entrée définie par une surface d'amorçage (13.2) du soudage, l'étape de mettre en frottement l'extrémité de tube contre l'élément pour ramollir la matière du tube et de l'élément, et l'étape d'introduire l'extrémité de tube dans le tronçon de soudage du logement pour y souder l'extrémité de tube, **caractérisé en ce que**, lors de l'introduction de l'extrémité de tube dans le tronçon de soudage, une partie de la matière du tube est refoulée de telle manière que, après durcissement, la matière refoulée soit reçue dans une gorge (8) ménagée entre le tronçon d'entrée et le tronçon de soudage pour constituer une butée s'opposant à une extraction du tube hors du logement de l'élément.

## Claims

1. A tubular element made of thermoplastic material softenable by friction for securing to a tube end by friction-welding for the purpose of transporting a fluid, the element comprising a body (1) having a housing (5) formed therein to receive the tube end, the housing having an inlet segment (6) for the tube end and a welding segment (9) with an inlet defined by a surface (13.2) for initiating welding, said welding segment (9) having at least one portion being cylindrical in shape and of diameter lying between the outside and inside diameters of the tube end, the tubular element being **characterized in that** the housing includes, between the inlet segment and the welding segment, at least one reception groove (8) for receiving a portion of the tube end that is pushed back during welding, the reception groove having a flank with at least a portion forming the weld-initiating surface and on its other side an abutment flank for the pushed-back portion.

2. An element according to claim 1, **characterized in that** the housing (5) is annular in shape with an inside surface that is formed by an outside surface of a nose (14) secured to the element so as to be inserted inside the tube end.

3. An element according to claim 2, **characterized in that** the reception groove (28) is formed in the outside of the nose (4).

4. An element according to any one of claims 1 to 3, **characterized in that** the housing (5) includes, in the vicinity of the inlet segment (6), a guide segment (7) for guiding the tube end.

5. A method of friction welding an element to a tube end both element and tube being made of thermoplastic material softzenable by friction, the method comprising the step of introducing the tube end into a housing formed in the element, the step of causing the tube end to rub against the element in order to soften the material of the tube and of the element, and the step of inserting the tube end in a welding segment of the housing in order to weld the tube end therein, the method being **characterized in that**, while the tube end is being inserted into the welding segment, a fraction of the material of the tube is pushed back in such a manner that, after hardening, the pushed-back material co-operates with a surface of the element to constitute an abutment opposing extraction of the tube from the housing in the element.

## Patentansprüche

1. Rohrförmiges Element aus thermoplastischem Material, das durch Reibung weich gemacht werden kann, um durch Reibschweißen an einem Ende des Rohres zum Transport einer Flüssigkeit befestigt zu werden, wobei das Element einen Körper (1) umfasst, in dem eine Kammer (5) ausgebildet ist zum Aufnehmen des Rohrendes, wobei die Kammer (5) einen Eingangsabschnitt (6) für das Rohrende und einen Schweißabschnitt (9) umfasst mit einem Eingang, der durch eine Auslösefläche (13.2) für das Schweißen begrenzt ist, wobei der Schweißabschnitt (9) mindestens einen zylindrischen Teil mit einem Durchmesser umfasst, der zwischen dem Außendurchmesser und dem Innendurchmesser des Rohrendes liegt, **dadurch gekennzeichnet, dass** die Kammer zwischen dem Eingangsabschnitt und dem Schweißabschnitt mindestens eine Aufnahmeaussparung (8) zur Aufnahme eines beim Schweißen gestauchten Abschnittes des Rohrendes umfasst, wobei die Aufnahmeaussparung eine Seitenwand aufweist, von der mindestens ein Abschnitt die Auslösefläche bildet, und gegenüberliegend eine Anschlagsfläche für den gestauchten Abschnitt aufweist.

2. Element nach Anspruch 1, **dadurch gekennzeichnet, dass** die Kammer (5) ringförmig ist, von der eine Innenfläche durch eine Außenfläche eines Fortsatzes (14) gebildet ist, der mit dem Element fest verbunden ist, damit er in das Rohrende eingeführt werden kann.

3. Element nach Anspruch 2, **dadurch gekennzeichnet, dass** die Aufnahmeaussparung (28) außen an dem Fortsatz (14) ausgebildet ist.

4. Element nach einem der Ansprüche 1 bis 3, **dadurch gekennzeichnet, dass** die Kammer (5) in der Nähe des Eingangsabschnittes (6) einen Abschnitt (7) zum Führen des Rohrendes umfasst.

5. Verfahren zum Reibschweißen eines Elements an ein Rohrende, wobei beide aus thermoplastischem Material bestehen, das durch Reibung weich gemacht werden kann, umfassend den Schritt des Einführens des Rohrendes in eine Kammer, die so am Element ausgebildet ist, dass die Kammer einen Eingangsabschnitt (6) des Rohrendes sowie einen Schweißabschnitt (9) mit einem Eingang umfasst, der durch eine Auslösefläche (13.2) für das Schweißen begrenzt ist, den Schritt, das Rohrende gegen das Element zu reiben, um das Material des Rohres und des Elementes weich zu machen, sowie den Schritt, das Rohrende in den Schweißabschnitt der Kammer einzuführen, um dort das Rohrende zu schweißen, **dadurch gekennzeichnet, dass**, wenn das Rohrende in den Schweißabschnitt eingeführt wird, ein Teil des Rohrmaterials so gestaucht wird, dass nach der Härtung das gestauchte Material in einer Aussparung (8) aufgenommen wird, die zwischen dem Eingangsabschnitt und dem Schweißabschnitt angebracht ist, um einen Anschlag zu bilden, der einer Extraktion des Rohres aus der Kammer heraus des Elements entgegensteuert.
